# EUROPÄISCHE PATENTSCHRIFT

(11) **EP 1 045 943 B1**
(45) Veröffentlichungstag und Bekanntmachung des Hinweises auf die Patenterteilung: **10.12.2003**
(21) Anmeldenummer: 98965882.8
(22) Anmeldetag: 31.12.1998
(51) Int. Cl.: E03C 1/084

(54) **VERFAHREN UND VORRICHTUNG ZUR DURCHFLUSSMENGENVERRINGERUNG VON FLÜSSIGKEITEN**
METHOD AND DEVICE FOR REDUCING THE FLOW-THROUGH QUANTITY OF LIQUIDS
PROCEDE ET DISPOSITIF POUR REDUIRE LE DEBIT DE LIQUIDES

(30) Priorität: 08.01.1998 DE 19800366
(43) Veröffentlichungstag der Anmeldung: 25.10.2000
(73) Patentinhaber: Schmolke, Norbert, 28832 Achim (DE)
(72) Erfinder: Neumann, Georg, D-28832 Achim (DE)
(74) Vertreter: Möller, Friedrich, Dipl.-Ing.
(86) Internationale Anmeldenummer: EP9808515
(87) Internationale Veröffentlichungsnummer: WO99035348

(56) Entgegenhaltungen:
- EP-A- 0 060 540
- DE-A- 3 825 537
- US-A- 2 950 063
- US-A- 4 403 739

## Beschreibung

Die Erfindung betrifft eine Vorrichtung zur Durchflussmengenverringerung von Flüssigkeiten.

Ein steigendes Umweltbewusstsein, aber auch Kostengesichtspunkte, erfordern immer mehr die Einsparung von Wasser, insbesondere Trinkwasser und anderen Flüssigkeiten. Das führt dazu, dass in zunehmendem Maße die Einsparung von Wasser nicht nur auf Regionen mit natürlicher Wasserknappheit begrenzt ist; vielmehr ist man inzwischen bestrebt, überall insbesondere Wasser einzusparen.

Aus der DE 38 25 537 A1 ist eine Vorrichtung zur Erhöhung der Strömungsenergie von Wasser in einem Duschkopf bekannt. Durch die Erhöhung der Strömungsenergie soll der Wasserdurchfluss reduziert und dadurch Wasser eingespart werden. Die bekannte Vorrichtung verfügt über mehrere zum Austritt von Wasser dienende Ausströmkanäle. Zu den Ausströmkanälen führen Luftleitungen, die durch einen zentralen Luftzufuhrkanal mit von außen angesaugter Luft versorgt werden.

Bei der bekannten Vorrichtung wird das Wasser direkt Ober einen Verteilerraum zu den Ausströmkanälen geleitet. Das Wasser muss daher zur Herbeiführung der Durchflussmengenverringerung in den Ausströmkanälen abgebremst werden. Gleichzeitig erfolgt in den Ausströmkanälen die Zumischung von Luft zum Wasser. Die gleichzeitige Drosselung und Luftzufuhr in den Ausströmkanälen hat nur eine uneffektive Durchflussmengenverringerung zur Folge. Außerdem wird der aus den Ausströmkanälen ausströmende Wasserstrahl der bekannten Vorrichtung von der zugeführten Luft nicht derart vergrößert, dass trotz einer Reduzierung der aus den Austrittskanälen austretenden Wassermenge ein kräftiger Wasserstrahl entsteht.

Hiervon ausgehend liegt der Erfindung die Aufgabe zugrunde, eine Vorrichtung zur effektiven Durchflussmengenverringerung von Flüssigkeiten zu schaffen.

Eine Vorrichtung zur Lösung der der Erfindung zugrundeliegenden Aufgabe weist die Merkmale des Anspruchs 1 auf. Durch die Mischscheibe mit mehreren Ausströmkanälen und wenigstens einem Luftzufuhrkanal und daran anschließende Luftleitungen wird erreicht, dass aus den Ausströmkanälen ein die Flüssigkeit "aufblähendes" und beschleunigendes Flüssigkeits-Gasgemisch austritt, indem dünne Flüssigkeitsstrahlen gebildet werden, die sich durch die Luftzufuhr besonders wirksam "aufblähen" und beschleunigen lassen.

Durch den von außen in die Mischscheibe einmündenden Luftzufuhrkanal sind die zu den Ausströmkanälen führenden Luftleitungen mit Luft speisbar. Dadurch kann Außenluft zum Zumischen zur Flüssigkeit dienen, die selbsttätig von der durch die Ausströmkanäle hindurchströmenden Flüssigkeit angesaugt wird.

Weiterhin ist vorgesehen, zwischen einer Drosseleinrichtung und den Ausströmkanälen in der Mischscheibe eine Ausgleichskammer vorzusehen. Die Ausgleichskammer dient insbesondere dazu, dass die Flüssigkeit nach der Drosselung einen gleichmäßigen Druck aufweist und somit durch alle Ausströmkanäle Flüssigkeit gleichen Drucks fließen kann. Das führt auch zu einer Vergleichmäßigung des aus der Mischscheibe austretenden Flüssigkeitsstroms.

Die Mischscheibe ist bei einer bevorzugten Vorrichtung in einem hülsenartigen Abschnitt des Gehäuses gelagert. Das geschieht vorzugsweise so, dass die Mischscheibe im Gehäuse beweglich ist. Die Bewegung der Mischscheibe im Gehäuse dient dann dazu, das Pulsieren der aus der Mischscheibe austretenden Flüssigkeitsstrahlen bzw. die Beschleunigung derselben zu vergrößern.

Gemäß einer bevorzugten Ausbildung der Vorrichtung ist die Mischscheibe in das Gehäuse einschraubbar. Durch mehr oder weniger weites Einschrauben in das Gehäuse kann die Mischscheibe in demselben auf- und abbewegt werden, und zwar in Strömungsrichtung. Dadurch, dass der Mischscheibe ein Teil der Drosseleinrichtung zugeordnet ist, lässt sich die Drosselung der Flüssigkeit verändern durch mehr oder weniger weites Einschrauben der Mischscheibe in das Gehäuse.

Gemäß einem weiteren Vorschlag der Erfindung sind die Ausströmkanäle schräg zu der Längsmittelachse der Vorrichtung, insbesondere der Mischscheibe, angeordnet. Durch die Schrägstellung der Ausströmkanäle übt die durch diese hindurchströmende Flüssigkeit bzw. das Flüssigkeits-Gasgemisch eine Reaktionskraft auf die Mischscheibe aus, die zur Bewegung, beispielsweise zum Rotieren derselben, führt.

Bevorzugte Ausführungsbeispiele der erfindungsgemäßen Vorrichtung werden nachfolgend anhand der Zeichnung näher erläutert. In dieser zeigen:
- Fig. 1: eine Seitenansicht eines Wasserhahns mit der Vorrichtung,
- Fig. 2: die Vorrichtung in einem Schnitt entlang der Linie II-II in der Fig. 3,
- Fig. 3: einen Schnitt durch eine Mischscheibe der Vorrichtung entlang der Linie III-III in der Fig. 2,
- Fig. 4: ein zweites Ausführungsbeispiel der Erfindung mit einer mehrteiligen Mischscheibe in einem Schnitt entlang der Linie IV-IV in der Fig. 5, und
- Fig. 5: eine Ansicht auf die Stirnseite eines Teils der Mischscheibe der Fig. 4.

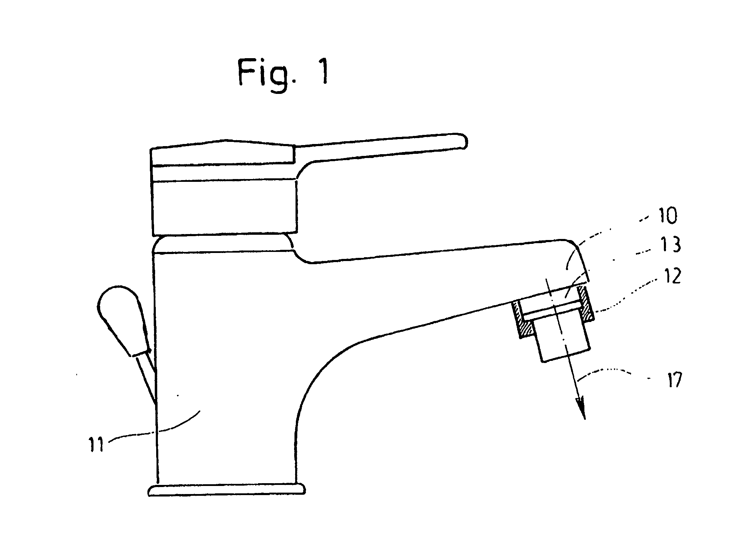

Die hier gezeigte Vorrichtung ist vor dem Ausfluss 10 eines Wasserhahns 11 montiert (Fig. 1). Im gezeigten Ausführungsbeispiel ist die Vorrichtung durch eine Überwurfmutter 12 vor dem Ausfluss 10 festgeschraubt, indem ein Innengewinde der Überwurfmutter 12 auf ein Außengewinde eines den Ausfluss 10 umgebenden Schraubansatzes 13 aufgeschraubt ist. Die Vorrichtung kann alternativ auch vor anderen wasserführenden Armaturen oder auch einem Duschkopf befestigt sein.

Die Vorrichtung dient dazu, die Durchflussmenge des aus dem Wasserhahn 11 ausströmenden Wassers zu regulieren, insbesondere zu verringern.

Die hier gezeigte Vorrichtung ist rotationssymmetrisch ausgebildet. Die Vorrichtung weist ein außen zylindrisches Gehäuse 14 und eine in das Gehäuse 14 eingeschraubte Mischscheibe 15 auf. Das Gehäuse 14 und die Mischscheibe 15 verfügen Ober eine gemeinsame Längsmittelachse 16, die längs zur Ausströmrichtung des Wassers aus der Vorrichtung verläuft, und zwar etwa mittig durch einen Gesamtstrahl des aus der Vorrichtung austretenden Wassers. Diese Strömungsrichtung ist in den Fig. 1, 2 und 4 durch einen Pfeil 17 angedeutet. In Strömungsrichtung 17 gesehen folgt auf eine Drosseleinrichtung 18 im Inneren der Vorrichtung die Mischscheibe 15. Zwischen der Drosseleinrichtung 18 und der Mischscheibe 15 befindet sich ein ringförmiger Ausgleichsraum 19.

Das Gehäuse 14 weist auf seiner in Strömungsrichtung 17 vornliegenden Rückseite eine Bodenwandung 20 auf. In der Bodenwandung 20 befindet sich eine mittige Durchgangsbohrung 21, durch die Wasser in das Gehäuse 14 einfließen kann. Zur Innenseite des Gehäuses 14 hin wird die Bodenwandung 20 fortgesetzt durch einen die Durchgangsbohrung 21 außen begrenzenden Zylinderansatz 22. Im Zylinderansatz 22 verfügt die Durchgangsbohrung 21 über eine sich in Strömungsrichtung 17 vergrößemde, kegelige Aufweitung 23. Die kegelige Aufweitung 23 bildet einen ersten Teil der Drosseleinrichtung 18.

Das Gehäuse 14 verfügt des weiteren Ober eine die Bodenwandung 20 in Strömungsrichtung 17 fortsetzende Mantelhülse 24. Die an ihrer der Bodenwandung 20 gegenüberliegenden Unterseite 25 offene Mantelhülse 24 des Gehäuses 14 verfügt über ein Innengewinde 26. Das von der Unterseite 25 ausgehende Innengewinde 26 erstreckt sich etwa über die halbe Länge der Mantelhülse 24.

In das Gehäuse 14, nämlich die Mantelhülse 24 desselben, ist die Mischscheibe 15 eingeschraubt. Dazu korrespondiert ein Außengewinde an der zylindrischen Mischscheibe 15 mit dem Innengewinde 26 des Gehäuses 14.

Die Mischscheibe 15 verfügt auf ihrer zur Bodenwandung 20 des Gehäuses 14 weisenden Rückseite 28 über einen vorstehenden Kegelansatz 29, dessen Kegelachse auf der Längsmittelachse 16 liegt. Dieser Kegelansatz 29 bildet den zweiten Teil der Drosseleinrichtung 18, wobei die schräge Wandung des Kegelansatzes 29 mit der kegeligen Aufweitung 23 im Zylinderansatz 22 des Gehäuses 14 korrespondiert, indem beide etwa den gleichen Neigungswinkel aufweisen.

In der Mischscheibe 15 sind mehrere Ausströmkanäle 30 angeordnet. Im gezeigten Ausführungsbeispiel sind die Ausströmkanäle 30 verteilt auf zwei konzentrisch zur Längsmittelachse 16 verlaufende Teilkreise 31 und 32 unterschiedlicher Durchmesser. Jeder Teilkreis 31 und 32 verfügt über eine gleiche Anzahl von Ausströmkanälen 30, und zwar im gezeigten Ausführungsbeispiel jeweils zwölf Ausströmkanäle 30, so dass die Mischscheibe 15 insgesamt vierundzwanzig Ausströmkanäle 30 aufweist. Die Ausströmkanäle 30 sind mit gleichem Abstand auf dem jeweiligen Teilkreis 31 und 32 angeordnet. Es sind beliebige Abweichungen von der gezeigten Anordnung der Ausströmkanäle 30 denkbar. Entscheidend ist, dass rings um die Längsmittelachse 16 mehrere Ausströmkanäle 30 auf mindestens einem Teilkreis angeordnet sind.

Die Ausströmkanäle 30 sind bei der gezeigten Mischscheibe 15 alle gleich ausgebildet. Sie bilden Durchgangsbohrungen durch die Mischscheibe 15. Bei der hier gezeigten Vorrichtung sind die Ausströmkanäle 30 als Düsen ausgebildet, und zwar als Venturidüsen. Dazu verfügt jeder Ausströmkanal 30 über drei Abschnitte, indem in Strömungsrichtung 17 gesehen auf einen ersten von der Rückseite 28 der Mischscheibe 15 ausgehenden Anfangsabschnitt 33 ein Mittelabschnitt 34 und schließlich ein in eine Vorderseite 35 der Mischscheibe 15 mündender Endabschnitt 36 folgt Der Endabschnitt 36 verfügt über eine Länge, die etwa der Summe der Längen des Anfangsabschnitts 33 und des Mittelabschnitts 34 entspricht. Der Mittelabschnitt 34 ist zylindrisch ausgebildet. Der Anfangsabschnitt 33 erweitert sich leicht zur Rückseite 27 der Mischscheibe 15 hin. Demgegenüber weist der Endabschnitt 36 eine deutliche Aufweitung zur Vorderseite 35 der Mischscheibe 15 hin auf. Dadurch kommt der Venturi-Düseneffekt zustande.

Die Mischscheibe 15 weist einen mittigen Luftzufuhrkanal 37 auf, der als eine zylindrische Sackbohrung ausgebildet ist, die in die Vorderseite 35 der Mischscheibe 15 einmündet und auf der Längsmittelachse 16 liegt. Zur Verlängerung des Luftzufuhrkanals 37 weist die Mischscheibe 15 einen gegenüber der Vorderseite 35 vorstehenden Ringabschnitt 38 auf. An der Unterseite weist der Ringabschnitt 38 einen durchgehenden Schlitz 39 auf, der als Ansatz für ein Werkzeug, beispielsweise einen Schraubenzieher, zum Eindrehen der Mischscheibe 15 in das Gehäuse 14 bzw. zum Herausdrehen der Mischscheibe 15 aus dem Gehäuse 14 dient.

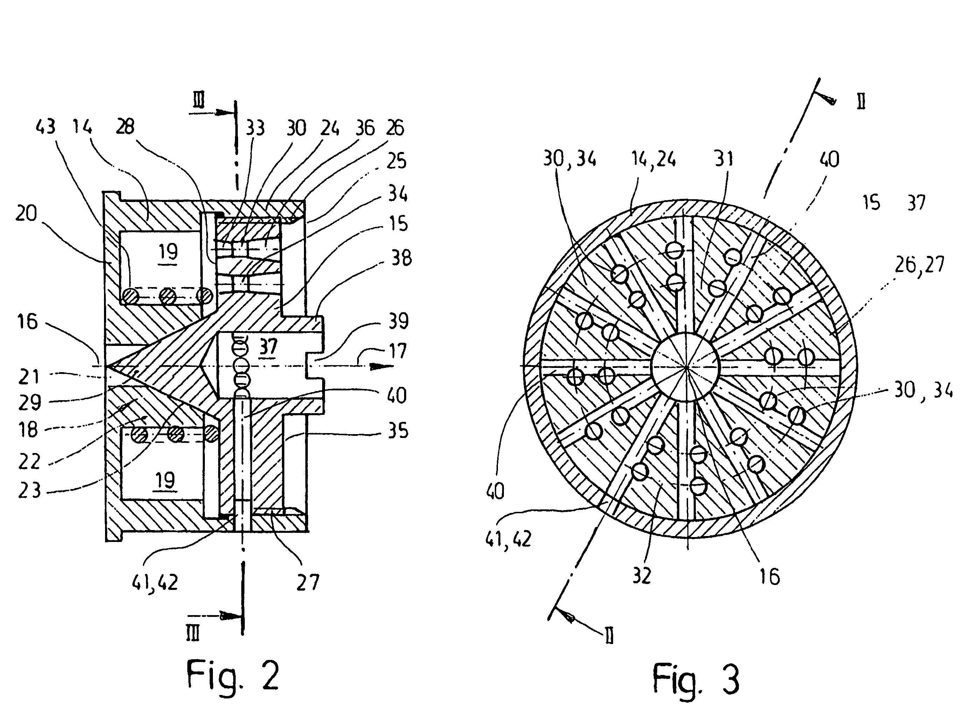

Vom Luftzufuhrkanal 37 zweigen mehrere Luftleitungen 40 ab, die mit den Ausströmkanälen 30 in Verbindung stehen. Im gezeigten Ausführungsbeispiel verlaufen die Luftleitungen 40 ausgehend vom auf der Längsmittelachse 16 liegenden Luftzufuhrkanal 37 radial bzw. sternförmig nach außen. Dabei liegen alle Luftleitungen 40 in einer gemeinsamen, senkrecht zur Längsmittelachse 16 verlaufenden Ebene. Die Luftleitungen 40 sind als gerade Durchgangsbohrungen ausgebildet. Jede Luftleitung 40 streift tangential zwei auf verschiedenen Teilkreisen 31 und 32 liegende Ausströmkanäle 30, und zwar derart, dass die jeweilige Luftleitung 40 mit den zylindrischen Mittelabschnitten 34 der entsprechenden Ausströmkanäle 30 in Verbindung steht. Auf diese Weise sind alle Ausströmkanäle 30 über die Luftleitungen 40 mit Luft versorgbar, indem zwölf Luftleitungen 40 vorgesehen sind, die jeweils zwei Ausströmkanäle 30 mit Luft versorgen. Die durchgehenden Luftleitungen 40 sind am Außenumfang der Mischscheibe 15 verschlossen durch die Innenseite der Mantelhülse 24 des Gehäuses 14. Im gezeigten Ausführungsbeispiel ist einer Luftleitung 40 eine korrespondierende Durchgangsbohrung 41 in der Mantelhülse 24 des Gehäuses 14 zugeordnet (Fig. 2). Diese Luftleitung 40 ist somit Ober die Durchgangsbohrung 41 von außen zugänglich. Auf diese Weise lässt sich die Mischscheibe 15 im Gehäuse 14 unverdrehbar sichern durch einen durch die Durchgangsbohrung 41 hindurchgehenden und ein Stück in die Luftleitung 40 hineinragenden Stopfen 42. Bei diesem Stopfen 42 kann es sich um eine Madenschraube handeln, die von außen in die Mantelhülse 24 des Gehäuses 14 eingeschraubt wird.

Im Ausgleichsraum 19 ist bei der hier gezeigten Vorrichtung eine Druckfeder 43 angeordnet, die sich einerseits unter der Bodenwandung 20 des Gehäuses 14 und andererseits an der Rückseite 28 der Mischscheibe 15 abstützt. Geführt ist die Druckfeder außen auf dem Zylinderansatz 42 im Ausgleichsraum 42 des Gehäuses 14. Durch die Druckfeder 43 wird die Mischscheibe 15 gegen die Gewindeflanken des Innengewindes 26 der Mantelhülse 24 des Gehäuses 14 gedrückt.

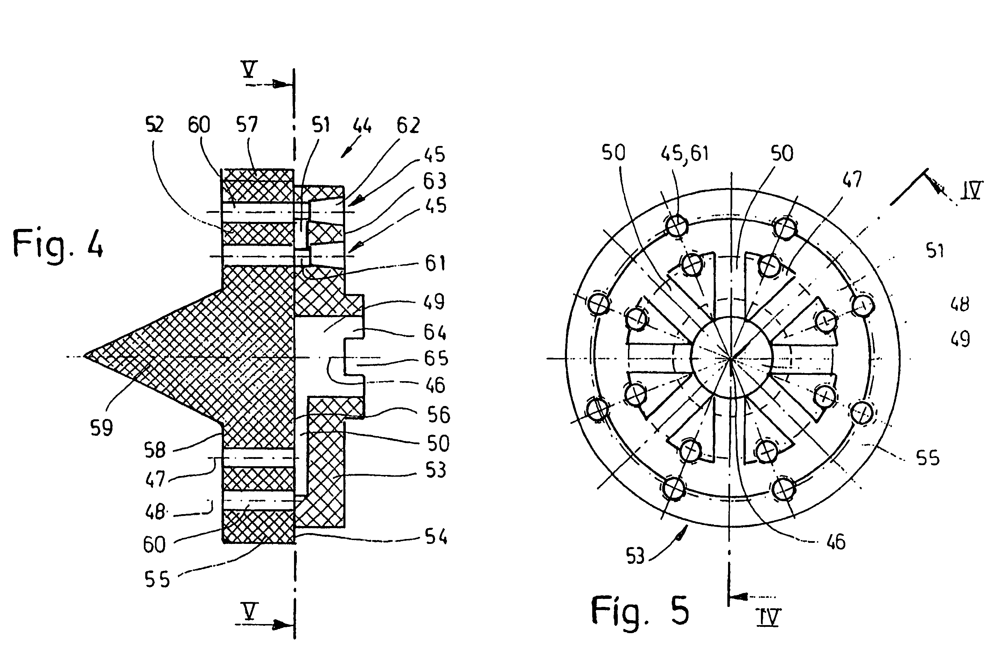

Die Fig. 4 und 5 zeigen ein zweites Ausführungsbeispiel einer Mischscheibe 44. Diese Mischscheibe 44 dient auch zur Anordnung in einem Gehäuse, das wie das Gehäuse 14 der Fig. 1 bis 3 ausgebildet sein kann. Die Mischscheibe 44 verfügt auch über mehrere Ausströmkanäle 45, die auf zwei konzentrisch zur Längsmittelachse 40 verlaufende Teilkreise 46 und 47 verteilt sind. Auf jedem Teilkreis 46 und 47 befindet sich eine gleiche Anzahl von Ausströmkanälen 45. Im gezeigten Ausführungsbeispiel sind es je acht Ausströmkanäle 45. Die Ausströmkanäle 45 werden auch bei der Mischscheibe 44 mit Luft versorgt über einen mittig auf der Längsmittelachse 46 liegenden Luftzufuhrkanal 49 und davon ausgehende Luftleitungen 50 und 51.

Eine Besonderheit der Mischscheibe 44 besteht darin, dass diese aus zwei unterschiedlichen Teilen gebildet ist, und zwar einem oberen Teil 52 und einem in Strömungsrichtung 17 dahinterliegenden unteren Teil 53. Eine ebene Unterseite 54 des oberen Teils 52 liegt an einer ebenen Oberseite 55 des unteren Teils 53 an. Auf diese Weise entsteht zwischen dem oberen Teil 52 und dem unteren Teil 53 eine quer zur Längsmittelachse 46 der Mischscheibe 44 verlaufende Trennebene 56. An der Trennebene 56 sind die beiden Teile 52 und 53 der Mischscheibe 44 miteinander verbunden, und zwar vorzugsweise durch Schweißen und/oder Kleben.

Der Außendurchmesser des oberen Teils 52 ist etwas größer als der des unteren Teils 53. Auf dem gegenüber dem unteren Teil 53 vorstehenden größeren Umfangsbereich des oberen Teils 52 befindet sich ein Außengewinde 57 zum Einschrauben der Mischscheibe 44 in die Mantelhülse 24 des Gehäuses 14. An der Oberseite 58 des oberen Teils 52 befindet sich ein Kegelansatz 59, der dem Kegelansatz 29 der Mischscheibe 15 entspricht und somit auch dazu dient, einen zweiten Teil der Drosseleinrichtung 18 in Verbindung mit der kegeligen Aufweitung 23 des Zylinderansatzes 22 des Gehäuses 14 zu bilden.

Jeder der gleich ausgebildeten Strömungskanäle 45 besteht aus drei Abschnitten, und zwar einen sich durch den gesamten oberen Teil 52 als zylindrische Durchgangsbohrung erstreckenden Anfangsabschnitt 60, einen Mittelabschnitt 61 und einen Endabschnitt 62. Der Mittelabschnitt 61 und der Endabschnitt 62 befinden sich im unteren Teil 53. Der Mittelabschnitt 61 ist zylindrisch ausgebildet und verfügt über einen Durchmesser, der etwa dem Durchmesser des Anfangsabschnitts 60 im oberen Teil 52 entspricht. Der sich an den Mittelabschnitt 61 in Strömungsrichtung 17 anschließende. Endabschnitt 62 ist kegelstumpfförmig ausgebildet, erweitert sich nämlich zur Unterseite 63 des unteren Teils 53 hin. Durch die Aufteilung in mehrere Abschnitte sind auch die Ausströmkanäle 45 als Düsen, und zwar konkret als Venturidüsen ausgebildet.

Der mittige Luftzufuhrkanal 49 verläuft als zylindrische Durchgangsbohrung vollständig durch das untere Teil 53 der Mischscheibe 44. An der Unterseite 63 des unteren Teils 53 ist der Luftzufuhrkanal 49 offen. An der gegenüberliegenden Rückseite ist der Luftzufuhrkanal 49 verschlossen im Bereich der Trennebene 56 durch die Unterseite 54 des oberen Teils 52 der Mischscheibe 44. Durch einen gegenüber der Unterseite 63 des unteren Teils 53 der Mischscheibe 44 vorstehenden Ringabschnitt 64 ist der Luftzufuhrkanal 49 verlängert. An der Unterseite des Ringabschnitts 64 befindet sich auch bei der Mischscheibe 44 ein quergerichteter Schlitz 65.

Vom Ende des Luftzufuhrkanals 49 zweigen radial nach außen gerichtete Luftleitungen 50 ab. Jede der gleich ausgebildeten Luftleitungen 50 ist durch eine von der Oberseite 55 des unteren Teils 53 ausgehende Nut gebildet. Somit begrenzt die Nut im unteren Teil 53 der Mischscheibe 44 drei Seiten jeder Luftleitung 50. Die vierte Seite jeder Luftleitung 50 liegt in der Trennebene 56 und wird hier abgedeckt durch die Unterseite 54 des oberen Teils 52 der Mischscheibe 44. Jede Luftleitung 50 läuft zwischen zwei auf dem inneren Teilkreis 47 liegenden Ausströmkanäle 45 hindurch, und zwar ohne mit diesen in Kontakt zu treten. Die Enden aller radialen Luftleitungen 50 münden in eine ringförmige Luftleitung 51. Diese ringförmige Luftleitung 51 verläuft konzentrisch um die Längsmittelachse 46 und ist ebenfalls gebildet durch eine umlaufende Nut im unteren Teil 53 der Mischscheibe 44. Die in der Trennebene 56 liegende freie Seite der ringförmigen Luftleitung 51 wird wiederum abgedeckt von der Unterseite 54 des oberen Teils 52 der Mischscheibe 44. Die Mitte der ringförmigen Luftleitung 51 liegt auf einem Teilkreis, der mittig zwischen den Teilkreisen 47 und 48 mit den Ausströmkanälen 45 liegt. Die Breite der ringförmigen Luftleitung 51 ist derart bemessen, dass diese teilweise durch alle Ausströmkanäle 45, und zwar sowohl auf dem inneren Teilkreis 47 als auch auf dem äußeren Teilkreis 48, verläuft. Dazu ist die Tiefe der ringförmigen Luftleitung 51, die der Tiefe der Luftleitung 50 entspricht, so gewählt, dass sie etwa mit der Länge der zylindrischen Mittelabschnitte 61 der Ausströmkanäle 45 übereinstimmt. Dadurch, dass die ringförmige Luftleitung 51 teilweise alle Ausströmkanäle 45 schneidet, werden alle Ausströmkanäle 45 mit durch den Luftzufuhrkanal 49 angesaugter Luft versorgt.

Die Funktionsweise der erfindungsgemäßen Vorrichtung wird im folgenden anhand des in den Fig. 1 bis 3 gezeigten Ausführungsbeispiels näher beschrieben:

Das aus dem Ausfluss 10 des Wasserhahns 11 herausfließende Wasser tritt durch die Durchgangsbohrung 21 in der Rückseite des Gehäuses 14 in die Vorrichtung ein. In der Drosseleinrichtung 18, nämlich zwischen der kegeligen Aufweitung 23 der Durchgangsbohrung 21 des Gehäuses 14 einerseits und dem damit korrespondierenden Kegelansatz 29 an der Rückseite der Mischscheibe 15 andererseits, wird die Wasserzufuhr gebremst und somit gedrosselt. Es tritt dadurch in den Ausgleichsräumen 19 weniger Wasser ein als ungedrosselt aus dem Ausfluss 10 des Wasserhahns 11 austreten könnte. Die Stärke der Drosselung und damit die Reduzierung der Durchflussmenge des Wassers ist einstellbar durch den Abstand der kegeligen Aufweitung 23 des Gehäuses 14 zum Kegelansatz 29 der Mischscheibe 15. Dieser Abstand lässt sich verringern durch weiteres Einschrauben der Mischscheibe 15 in das Gehäuse 14. Entsprechend wird die Durchflussmenge des Wassers reduziert. Vergrößern lässt sich der Abstand zwischen der kegeligen Aufweitung 23 und dem Kegelansatz 29 durch ein weiteres Ausschrauben der Mischscheibe 15 aus dem Gehäuse 14. Die Folge ist eine größere Durchflussmenge an Wasser durch die Vorrichtung.

Das gedrosselte und in der Menge reduzierte Wasser wird im Ausgleichsraum 19 beruhigt, wobei gleichzeitig eine Vergleichmäßigung des Drucks des gedrosselten Wassers stattfindet, damit an der Rückseite 28 der Mischscheibe 15 überall der gleiche, in der Drosseleinrichtung 18 reduzierte Druck des Wassers anliegt.

Das Wasser gelangt vom Ausgleichsraum 19 in die Ausströmkanäle 30, durchströmt die Ausströmkanäle 30 und damit die Mischscheibe 15 und tritt schließlich an der Vorderseite 35 der Mischscheibe 15 aus der Vorrichtung aus. In den Ausströmkanälen 30 erfährt das Wasser eine Beschleunigung, und zwar insbesondere aufgrund der düsenartigen Ausbildung der Ausströmkanäle 30. Das aus den Ausströmkanälen ausströmende Wasser bildet infolge der Anordnung der Ausströmkanäle 30 auf den Teilkreisen 31 und 32 einen hohlen Wasserstrahl. Durch die Anordnung einer Vielzahl von Ausströmkanälen 30 auf den Teilkreisen 31 und 32 wirkt der aus der Mischscheibe 15 austretende, hohle Wasserstrahl als ein geschlossener Wasserstrahl, wodurch die den Wasserverbrauch verringernde Reduzierung der Durchflussmenge optisch nicht auffällt, und zwar insbesondere infolge der Beschleunigung des Wassers in den Ausströmkanälen 30.

Beim Hindurchströmen des Wassers durch die Ausströmkanäle 30 wird in den darin mündenden Luftleitungen 40 ein Unterdruck erzeugt, der dazu führt, dass im Luftzufuhrkanal 37 Luft angesaugt wird. Dieses erfolgt von der Vorderseite 35 der Mischscheibe 15 her gegen die Strömungsrichtung 17 und durch die Mitte des innen hohlen Wasserstrahls. Die so angesaugte Luft gelangt über die Luftleitungen 40 zu den Ausströmkanälen 30 und wird dort mit dem ausströmenden Wasser vermischt. Hierdurch wird das Wasservolumen aufgeweitet. Zusätzlich erhält das Wasser durch die Luftzumischung einen Impuls, der zur weiteren Beschleunigung des Wassers einschließlich der damit vermischten Luft in den Ausströmkanälen 30 führt. Es treten somit aus den Ausströmkanälen 30 mit Luft vermischte und pulsierende Wasserstrahlen aus, die nach Verlassen der Vorrichtung einen hohlen, aufgeweiteten und Lufteinschlüsse aufweisenden Wasserstrahl großer Geschwindigkeit bilden.

Um infolge des pulsierenden Wasseraustritts aus der Vorrichtung ein Schwingen bzw. Flattern der Mischscheibe 15 im Gewinde zur Verbindung der Mischscheibe 15 mit dem Gehäuse 14 zu vermeiden, ist die Druckfeder 43 vorgesehen, die infolge ihrer Vorspannung die Mischscheibe 15 gegen die Gewindeflanken des Gewindes zwischen der Mischscheibe 15 und dem Gehäuse 14 drückt. Dadurch werden Geräusche, die durch eine im Gehäuse 14 sich bewegende, insbesondere schwingende, Mischscheibe 15 hervorgerufen werden könnten, wirksam vermieden.

Durch ein Verdrehen der Mischscheibe 15 im Gehäuse 14 gelangt die Mischscheibe 15 mehr oder weniger tief in das Gehäuse 14 hinein, wodurch in der Drosseleinrichtung 18 der Wasserzuftuss zum Ausgleichsraum 19 in der Vorrichtung verändert werden kann zur Einstellung der gewünschten Wasserdurchflussmenge.

## Patentansprüche

1. Vorrichtung zur Durchflussmengenverringerung von Flüssigkeiten mit einem Gehäuse (14), in dem eine Drosseleinrichtung (18), ein Ausgleichsraum (19) und eine Mischscheibe (15, 44) angeordnet sind, wobei sowohl das Gehäuse (14) als auch die Mischscheibe (15, 44) korrespondierende Teile der Drosseleinrichtung (18) aufweisen, die Drosseleinrichtung (18) verstellbar ist durch eine Veränderung der Position der Mischscheibe (15, 44) im Gehäuse (14), die Mischscheibe (15, 44) zum Ausströmen von Flüssigkeit aus dem Gehäuse (14) dienende Ausströmkanäle (30, 45), mindestens einen von außen in die Mischscheibe (15, 44) einmündenden Luftzufuhrkanal (37, 49) und daran anschließende Luftleitungen (40, 50, 51) aufweist, derart, dass der durch die Ausströmkanäle (30, 45) ausströmenden Flüssigkeit in den Ausströmkanälen (30, 45) über den mindestens einen Luftzufuhrkanal (37, 49) und die Luftleitungen (40, 50, 51) zusätzliche Luft zumischbar ist, und der Ausgleichsraum (19) zwischen der Drosseleinrichtung (18) und den Ausströmkanälen (30, 45) in Strömungsrichtung (17) gesehen vor den Ausströmkanälen (30, 45) angeordnet ist.

2. Vorrichtung nach Anspruch 1, **dadurch gekennzeichnet, dass** der Luftzufuhrkanal (37, 49) mittig in der Mischscheibe (15, 44) angeordnet ist, vorzugsweise auf einer längs zur Strömungsrichtung (17) der Flüssigkeit verlaufenden Längsmittelachse (16, 46) der Mischscheibe (15, 44) liegt.

3. Vorrichtung nach Anspruch 1 oder 2, **dadurch gekennzeichnet, dass** der Luftzufuhrkanal (37, 49) von einer Austrittsseite der Flüssigkeit aus der Mischscheibe (15, 44) her in derselben einmündet, und vorzugsweise von den Ausströmkanälen (30, 45) umgeben ist.

4. Vorrichtung nach einem der vorhergehenden Ansprüche, **dadurch gekennzeichnet, dass** die Ausströmkanäle (30, 45) als Düsen, insbesondere als Venturidüsen, ausgebildet sind.

5. Vorrichtung nach einem der vorhergehenden Ansprüche, **dadurch gekennzeichnet, dass** die Mischscheibe (15, 44) in einem hülsenartigen Abschnitt des Gehäuses (14) gelagert ist, vorzugsweise lösbar, indem sie zum Beispiel in das Gehäuse (14) einschraubbar ist.

6. Vorrichtung nach einem der vorhergehenden Ansprüche, **dadurch gekennzeichnet, dass** die Mischscheibe (15, 44) in dem Gehäuse (14) bewegbar, vorzugsweise in Strömungsrichtung (17) hin- und herbewegbar, ist.

7. Vorrichtung nach einem der vorhergehenden Ansprüche, **dadurch gekennzeichnet, dass** die Mischscheibe (15, 44) im Gehäuse (14) durch eine Feder, vorzugsweise eine Druckfeder (43), vorgespannt ist.

8. Vorrichtung nach einem der vorhergehenden Ansprüche, **dadurch gekennzeichnet, dass** die Mischscheibe (15, 44) im Gehäuse (14) drehbar, vorzugsweise frei drehbar, ist.

9. Vorrichtung nach einem der vorhergehenden Ansprüche, **dadurch gekennzeichnet, dass** durch eine in Strömungsrichtung (17) erfolgende Hin- und Herbewegung der Mischscheibe (15, 44) im Gehäuse (14) die Drosseleinrichtung (18) verstellbar ist.

10. Vorrichtung nach einem der vorhergehenden Ansprüche, **dadurch gekennzeichnet, dass** die Mischscheibe (44) mehrteilig ausgebildet ist, vorzugsweise sich aus zwei in einer senkrecht zur Strömungsrichtung (17) der Flüssigkeit verlaufenden Trennebene (56) geteilte Teile (52, 53) zusammensetzt, wobei vorzugsweise sich jeder Ausströmkanal (45) durch beide Teile (52, 53) der Mischscheibe (44) erstreckt.

11. Vorrichtung nach einem der vorhergehenden Ansprüche, **dadurch gekennzeichnet, dass** die Luftleitungen (50, 51) in einem unteren Teil (53) der Mischscheibe (44) ausgehend von der in der Trennebene (56) liegenden Fläche des betreffenden Teils (53) angeordnet sind.

12. Vorrichtung nach einem der vorhergehenden Ansprüche, **dadurch gekennzeichnet, dass** die Ausströmkanäle (30, 45) schräg zur Längsmittelachse (16, 46) der Mischscheibe (15, 44) verlaufen, vorzugsweise schräg in einer tangential zur Längsmittelachse (16, 46) verlaufenden Ebene.

## Claims

1. Appliance for reducing the throughflow quantity of liquids, with a housing (14), in which are arranged a throttle device (18), a compensating space (19) and a mixing disc (15, 44), both the housing (14) and the mixing disc (15, 44) having corresponding parts of the throttle device (18), the throttle device (18) being adjustable by a variation in the position of the mixing disc (15, 44) in the housing (14), the mixing disc (15, 44) having, for the outflow of liquid from outflow ducts (30, 45) serving the housing (14), at least one air supply duct (37, 49) issuing into the mixing disc (15, 44) from outside and air conduits (40, 50, 51) adjoining the said air supply duct, in such a way that the liquid in the outflow ducts (30, 45) which flows out through the outflow ducts (30, 45) can have additional air admixed to it via the at least one air supply duct (37, 49) and the air conduits (40, 50, 51), and the compensating space (19) being arranged upstream of the outflow ducts (30, 45), as seen in the direction of flow (17), between the throttle device (18) and the outflow ducts (30, 45).

2. Appliance according to Claim 1, **characterized in that** the air supply duct (37, 49) is arranged centrally in the mixing disc (15, 44), and preferably lies on a longitudinal mid-axis (16, 46) of the mixing disc (15, 44), the said longitudinal mid-axis running longitudinally to the direction of flow (17) of the liquid.

3. Appliance according to Claim 1 or 2, **characterized in that** the air supply duct (37, 49) issues to the mixing disc (15, 44) from an outflow side of the liquid out of the said mixing disc and is preferably surrounded by the outflow ducts (30, 45).

4. Appliance according to one of the preceding claims, **characterized in that** the outflow ducts (30, 45) are designed as nozzles, in particular as Venturi tubes.

5. Appliance according to one of the preceding claims, **characterized in that** the mixing disc (15, 44) is mounted, preferably releasably, in a sleeve -like portion of the housing (14), **in that** the said mixing disc can, for example, be screwed into the housing (14).

6. Appliance according to one of the preceding claims, **characterized in that** the mixing disc (15, 44) is movable, preferably movable back and forth in the direction of flow (17), in the housing (14).

7. Appliance according to one of the preceding claims, **characterized in that** the mixing disc (15, 44) is prestressed in the housing (14) by a spring, preferably compression spring (43).

8. Appliance according to one of the preceding claims, **characterized in that** the mixing disc (15, 44) is rotatable, preferably freely rotatable, in the housing (14).

9. Appliance according to one of the preceding claims, **characterized in that** the throttle device (18) can be adjusted in the housing (14) by means of a back-and-forth movement of the mixing disc (15, 44) taking place in the direction of flow (17).

10. Appliance according to one of the preceding claims, **characterized in that** the mixing disc (44) is of multi-part design, preferably is composed of two parts (52, 53) divided in a parting plane (56) running perpendicularly to the direction of flow (17) of the liquid, preferably each outflow duct (45) extending through both parts (52, 53) of the mixing disc (44).

11. Appliance according to one of the preceding claims, **characterized in that** the air conduits (50, 51) are arranged in a lower part (53) of the mixing disc (44), so as to start from that surface of the respective part (53) which lies in the parting plane (56).

12. Appliance according to one of the preceding claims, **characterized in that** the outflow ducts (30, 45) run obliquely to the longitudinal mid-axis (16, 46) of the mixing disc (15, 44), preferably obliquely in a plane running tangentially to the longitudinal mid-axis (16, 46).

## Revendications

1. Dispositif de réduction de débit de liquides comportant un corps (14) qui contient un dispositif d'étranglement (18), un espace de compensation (19) et un disque mélangeur (15, 44), le corps (14) et le disque mélangeur (15, 44) présentant des parties correspondantes du dispositif d'étranglement (18), le dispositif d'étranglement (18) étant réglable par changement de position du disque mélangeur (15, 44) dans le corps (14), le disque mélangeur (15, 44) présentant des canaux d'écoulement (30, 45) servant à l'écoulement de liquide du corps (14), au moins un canal d'amenée d'air (37, 49) débouchant de l'extérieur dans le disque mélangeur (15, 44) et des conduites d'air (40, 50, 51) communiquant avec le canal d'amenée d'air (37, 49), de façon telle que de l'air supplémentaire puisse, par le ou les canaux d'amenée d'air (37, 49) et les conduites d'air (40, 50, 51), être ajouté et mélangé dans les canaux d'écoulement (30, 45) au liquide qui s'écoule dans ces canaux (30, 45), et l'espace de compensation (19) est situé entre le dispositif d'étranglement (18) et les canaux d'écoulement (30, 45) avant ces canaux (30, 45) dans le sens d'écoulement (17).

2. Dispositif selon la revendication 1, **caractérisé par le fait que** le canal d'amenée d'air (37, 49) est situé au milieu du disque mélangeur (15, 44), de préférence sur un axe longitudinal (16, 46) du disque mélangeur (15, 44) s'étendant dans la direction d'écoulement (17) du liquide.

3. Dispositif selon l'une des revendications 1 et 2, **caractérisé par le fait que** le canal d'amenée d'air (37, 49) débouche dans le disque mélangeur (15, 44) depuis un côté de sortie du liquide de celui-ci, et est de préférence entouré par les canaux d'écoulement (30, 45).

4. Dispositif selon l'une des revendications précédentes, **caractérisé par le fait que** les canaux d'écoulement (30, 45) sont formés de buses, en particulier de buses venturi.

5. Dispositif selon l'une des revendications précédentes, **caractérisé par le fait que** le disque mélangeur (15, 44) est monté dans une partie du genre douille du corps (14), de préférence de façon démontable en étant par exemple vissable dans le corps (14).

6. Dispositif selon l'une des revendications précédentes, **caractérisé par le fait que** le disque mélangeur (15, 44) est mobile dans le corps (14), de préférence peut aller et venir dans la direction d'écoulement (17).

7. Dispositif selon l'une des revendications précédentes, **caractérisé par le fait que** le disque mélangeur (15, 44) est précontraint dans le corps (14) par un ressort, de préférence par un ressort de compression (43).

8. Dispositif selon l'une des revendications précédentes, **caractérisé par le fait que** le disque mélangeur (15, 44) peut tourner, de préférence librement, dans le corps (14).

9. Dispositif selon l'une des revendications précédentes, **caractérisé par le fait que** le dispositif d'étranglement (18) est réglable par un mouvement de va-et-vient du disque mélangeur (15, 44) dans la direction d'écoulement (17) dans le corps (14).

10. Dispositif selon l'une des revendications précédentes, **caractérisé par le fait que** le disque mélangeur (44) est en plusieurs parties, de préférence se compose de deux parties (52, 53) séparées par un plan de séparation (56) perpendiculaire à la direction d'écoulement (17) du liquide, et de préférence, chaque canal d'écoulement (45) traverse les deux parties (52, 53) du disque mélangeur (44).

11. Dispositif selon l'une des revendications précédentes, **caractérisé par le fait que** les conduites d'air (50, 51) sont situées dans une partie inférieure (53) du disque mélangeur (44) à partir de la surface de ladite partie (53) située dans le plan de séparation (56).

12. Dispositif selon l'une des revendications précédentes, **caractérisé par le fait que** les canaux d'écoulement (30, 45) s'étendent obliquement par rapport à l'axe longitudinal (16, 46) du disque mélangeur (15, 44), de préférence obliquement dans un plan s'étendant tangentiellement à l'axe longitudinal (16, 46).
